# EUROPÄISCHE PATENTSCHRIFT

(11) **EP 1 889 776 B1**
(45) Veröffentlichungstag und Bekanntmachung des Hinweises auf die Patenterteilung: **07.10.2009**
(21) Anmeldenummer: 06017112.1
(22) Anmeldetag: 17.08.2006
(51) Int. Cl.: B62D 29/00

(54) **Verfahren zum Verstärken einer offenen Hohlprofilstruktur eines Bauteils, insbesondere eines Kfz-Bauteils aus Metall**
Method of reinforcement of an open hollow member, in particular made of metal for a vehicle
Procédé de renforcement d'un profil creux et ouvert, en particulier pour un profile fabriqué en métal pour véhicule automobile

(43) Veröffentlichungstag der Anmeldung: 20.02.2008
(73) Patentinhaber: INPRO Innovationsgesellschaft für fortgeschrittene Produktionssysteme in der Fahrzeugindustrie mbH, 10587 Berlin (DE)
(72) Erfinder: Gleich, Henning Dr., 10587 Berlin (DE); Özden, Kaya, 10587 Berlin (DE); Schulenburg, Matthias, 10587 Berlin (DE)
(74) Vertreter: Hoffmann, Klaus-Dieter

(56) Entgegenhaltungen:
- EP-A2- 1 306 292
- WO-A2-20/04041622
- DE-A1- 1 704 387
- DE-U1- 9 406 302
- US-A1- 2002 148 198
- US-A1- 2006 175 786
- US-B1- 6 421 979

## Beschreibung

Die Erfindung betrifft ein Verfahren zum Verstärken einer offenen Hohlprofilstruktur eines Bauteils, insbesondere eines Kfz-Bauteils aus Metall, bei dem mehrere Verstärkungsprofile entlang des Längsverlaufs der offenen Hohlprofilstruktur des Bauteils im Abstand zueinander in dieses eingebracht und entgegengesetzte Enden jedes Verstärkungprofils an zueinander entgegengesetzten Innenwandbereichen der offenen Hohlprofilstruktur des Bauteils fixiert werden.

Die Erfindung betrifft auch eine offene Hohlprofilstruktur eines Bauteils, insbesondere eines Kfz-Bauteils aus Metall, deren Innenraum Versteifungsprofile aufweist, die mit der Innenwand der offenen Hohlprofilstruktur fest verbunden sind.

Im Fahrzeugbau werden heutzutage Achsen wegen der Vielzahl der Motorisierungstypen wie Benzin- und Dieselmotoren mit unterschiedlicher Leistung und Hubraum oft in vielen Varianten gefertigt, um dem Einfluß der unterschiedlichsten Motorengewichte und Motorenleistungen gerecht zu werden.

Durch eine variable Verstärkung des Achsenbasissystems kann die notwendige Variantenvielfalt und damit der Fertigungsaufwand reduziert werden.

Neben Achskomponenten in zwei- oder mehrteiliger Schalenform werden auch Karosseriehohlstrukturen wie z.B. Schweller oder die tragenden Säulen (A, B, C) durch den Einsatz von zusätzlichen tiefgezogenen Bauteilen lokal verstärkt.

Allgemein bekannt ist es, für den Einsatz im Fahrzeugbau Leichtbauteile aus einem schalenförmigen Grundkörper aus Stahlblech oder Aluminium herzustellen, der zur Versteifung mit Verstärkungsrippen verschweißt, vernietet oder verschraubt wird. Auch das Verkleben von konstruktiv-/geometrisch angepaßten Polymerteilen zur Verstärkung von Hohlprofilstrukturen ist gängig. Allgemein bekannt ist weiterhin, an Gußteilen Verstärkungsrippen anzubringen und diese so anzuordnen, daß entsprechend der Krafteinleitung und des Kraftflusses eine Versteifung des Gußteils und eine Reduzierung der Spannungsspitzen erreicht werden, so daß die Verstärkungsrippen im wesentlichen in Richtung des Kraftflusses angeordnet sind.

Aus der DE 42 13130 A1 ist zudem bekannt, zur Versteifung einer Hohlprofilstruktur eines Trägerteils für eine Kfz-Leichtmetallkarosserie Versteifungsrippen im Abstand zueinander an den Innenwänden von zwei schalenförmigen Leichtmetall-Gußteilen der Hohlprofilstrutur so anzuformen, daß sich die Verstärkungsrippen als schmale, plattenförmige Stege über einen Großteil des Querschnittsverlaufes der Hohlprofilstruktur quer zum Längsverlauf des Trägerteils angeordnet erstrecken und mit einer Schmalseite in ihrer Rippenhöhe in den Hohlraum des Trägerteils abstehen. Das Anformen der Versteifungsrippen an die Innenwände der beiden schalenförmigen Leichtmetall-Gußteile erfordert die Verwendung geometriegenauer Verstärkungsrippen und deren verhältnismäßig aufwendige maßgenaue Anpassung und Befestigung.

Bekannt ist ferner (EP 3 70 243-A; DE-PS 38 39855), bei einem Leichtbauteil aus einem schalenförmigen Grundkörper aus Metallblech, das mit einem Haftvermittler versehen ist, oder aus einem Kunststoffblech besteht, ein aus aneinandergereihten V-Abschnitten gebildetes Kunststoffteil an den Innenwänden des schalenförmigen Grundkörpers anzuspritzen zur Erhöhung der Biege- und Torsionssteifigkeit gegenüber einem schalenförmigen Grundkörper ohne solche Versteifungen. Abgesehen von dem aufwendigen Anspritzverfahren kommt einer derartigen V-förmigen Versteifungsanordnung hinsichtlich einer querschnittserhaltenen Funktion nur eine untergeordnete Bedeutung zu.

Die EP 370 342-A offenbart damit ein Verfahren zum Verstärken einer offenen Hohlprofilstruktur nach dem Oberbegriff der Ansprüche 1 und 2.

Der Erfindung liegt die Aufgabe zugrunde, ein Verfahren gemäß dem Oberbegriff des Patentanspruchs 1 wie auch des Patentanspruchs 2 zur Verfügung zu stellen, mit dem eine Versteifung offener Hohlprofilstrukturen von Bauteile, insbesondere von Kfz-Bauteilen aus Metall, in geometrieunabhängiger, effizienter und kostenmindernder Weise erzielt werden kann.

Diese Aufgabe wird erfindungsgemäß dadurch gelöst, daß
- geometrietolerante, zumindest als Umhüllung oder Außenmantel eine Thermoplastschicht aufweisende Verstärkungsprofile verwendet werden, die jeweils ein im Bereich von 0,4 mm bis 2,0 mm liegendes Übermaß im Vergleich zur Abmessung jedes Verstärkungsprofils zwischen den zu bildenden Fixierstellen seiner entgegengesetzten Enden an den entsprechenden Innenwandbereichen der offenen Hohlprofilstruktur aufweisen,
- jedes Verstärkungsprofil geometrietolerant in die offene Hohlprofilstruktur des Bauteils mit vorbestimmten Anpreßdruck eingedrückt wird, wobei die Bereiche der Thermoplastschicht jedes Verstärkungsprofil, die mit den entsprechenden Innenwandbereichen der offenen Hohlprofilstruktur des Bauteils zu verbinden sind, lokal erwärmt und gezielt aufgeschmolzen werden und
- dabei das Verstärkungsprofil geometrietolerant in die Fixierposition zwischen den entsprechenden Innenwandbereichen der offenen Hohlprofilstruktur des Bauteils bewegt und zugleich an diese konturenmäßig an den plastifizierten Bereichen angepaßt wird, und
- unmittelbar anschließend der Verbund abgekühlt und dabei jedes Verstärkungsprofil ohne einen Haftvermittler mit den entsprechenden Innenwandbereichen der offenen Hohlprofilstruktur des Bauteils haftsicher verbunden wird.
   Die Aufgabe wird erfindungsgemäß auch dadurch gelöst, daß
- geometrietolerante, zumindest als Umhüllung oder Außenmantel eine Thermoplastschicht aufweisende Verstärkungsprofile verwendet werden, die jeweils ein im Bereich von 0,4 mm bis 2,0 mm liegendes Übermaß im Vergleich zur Abmessung des jeweiligen Verstärkungsprofils
   zwischen den zu bildenden Fixierstellen seiner entgegengesetzten Enden an vorbestimmten Innenwandbereichen der offenen Hohlprofilstruktur des Bauteils aufweisen,
- jedes Verstärkungsprofil an den Bereichen seiner Thermoplastschicht, die mit den vorbestimmten Innenwandbereichen der offenen Hohlprofilstruktur des Bauteils zu verbinden sind, unmittelbar lokal erwärmt und dabei gezielt aufgeschmolzen und
- sofort anschließend in die offene Hohlprofilstruktur des Bauteils zur Fixierung an den vorbestimmten Innenwandbereichen mit vorbestimmten Anpreßdruck eingedrückt wird,
- wobei das Verstärkungsprofil geometrietolerant in die Fixierposition an den vorbestimmten Innenwandbereichen der offenen Hohlprofilstrukur des Bauteils bewegt und zugleich an diese konturenmäßig mit den plastifizierten Bereichen seiner Thermoplastschicht angepaßt wird und
- unmittelbar anschließend der Verbund abgekühlt und jedes Verstärkungsprofil ohne einen Haftvermittler mit dem vorbestimmten Innenwandbereichen der offenen Hohlprofilstruktur des Bauteils diese versteifend haftsicher verbunden wird.

Stabförmige und/oder plattenförmige Verstärkungselemente können als Verstärkungsprofile verwendet werden. Ebenso können Verstärkungsprofile beliebiger Kontur verwendet werden, die auch jeweils aus mehreren Verstärkungselementen gebildet sein können. Hierbei können alle Thermoplaste als Material für die Verstärkungsprofile bzw. Verstärkungselemente zum Einsatz kommen, deren Schmelzpunkt unterhalb des Schmelzpunktes des Material des zu verstärkenden Bauteils liegt.

Vorzugsweise wird jedes Verstärkungsprofile oder eine Verstärkungsprofilanordnung aus mindestens zwei stegartigen, plattenförmigen und jeweils eine Längskantennut aufweisenden geometrietoleranten Halbzeugen (Verstärkungselementen) zusammengesetzt, indem diese spiegelbildlich an den Längskantennuten kreuzförmig mit Bewegungsspiel ineinandergesteckt werden derart, daß die Halbzeuge des kreuzförmigen Verstärkungsprofils sich jeweils nach gezielter Plastifizierung ihrer thermoplastischen Verbundbereiche beim Eindrücken in die offene Hohlprofilstruktur des Bauteils in die Fixierposition bewegen und sich dabei an die Kontur der entsprechenden Innenwandbereiche der offenen Hohlprofilstruktur des Bauteils anpassen und beim anschließenden Abkühlen der Verbundbereiche ohne Haftvermittler haftsicher mit den entsprechenden Innenwandbereichen der offenen Hohlprofilstruktur des Bauteils verbunden werden.

Sehr flexibel erweist es sich, zum Verstärken der offenen Hohlprofilstruktur eines Bauteils die Verstärkungsprofile jeweils aus zwei stegartigen, plattenförmigen Versteifungselementen (Halbzeugen) kreuzförmig zusammenzusetzen, deren Längskantennut jeweils mittig in der entsprechenden Längskante des Halbzeugs ausgebildet ist. Auch können mehr als zwei stegartige, plattenförmige Verstärkungselemente, die jeweils eine gleiche Anzahl identischer Längskantennuten aufweisen, die im Abstand zueinander an der entsprechenden Längskante jedes Verstärkungselementes ausgebildet sind, zu einer kreuzgitterförmigen Verstärkungsprofilanordnung der offenen Hohlprofilstruktur des Bauteils zusammengefügt werden.
Bevorzugt werden Verstärkungsprofile bzw. Verstärkungselemente verwendet, die aus unterschiedlich verstärkten thermoplastischen Kunststoffen, z.B. glasfaserverstärktes Polybutylenteraphthalat (PBT) oder faserverstärktes Polyamid (PA) hergestellt sind. Es können auch Verstärkungsprofile bzw. Verstärkungselemente verwendet werden, die als sandwichartige Hybrid-Konstruktion ausgebildet sind, wobei der Außenmantel oder die Umhüllung der Hybrid-Konstruktion aus Thermoplast und deren Kern aus Duroplast, Elastomer oder einem Metall, z.B. Aluminium gebildet ist und nur der Außenmantel oder die Umhüllung der Hybrid-Konstruktion das Übermaß aufweist.

Vorzugsweise erfolgt das lokale Aufheizen der vorbestimmten Innenwandbereiche der offenen Hohlprofilstruktur des Bauteils oder das unmittelbare Erwärmen der Verstärkungsprofile bzw. Verstärkungselemente vor deren Einbringung in die offene Hohlprofilstruktur des Bauteils mittels Ofen, Laser, Flamme, Mikrowelle, Heißgas, induktiv oder infrarot.

Bei der Kfz-Fertigung können die geometrietoleranten Verstärkungsprofile bzw. Verstärkungselemente geeigneterweise mittels Roboter taktmäßig in die offene Hohlprofilstruktur des Bauteils an deren entsprechend lokal erwärmten Innenwandbereichen in die jeweilige Fixierposition gedrückt werden.

Zur Verstärkung einer offenen Hohlprofilstruktur eines Bauteils aus metallischem Blech hat sich die Wahl folgender Verfahrensparameter als vorteilhaft erwiesen:
Material der Verstärkungsprofile bzw. Verstärkungselemente: 30% glasfasergefülltes Polyamid (PA-30GF)
Zeit der lokalen Aufheizung der offenen Hohlprofilstruktur des Bauteils aus Blech: induktiv ca. 5 sec, offenen Flamme ca. 60 sec
Fügezeit/Anpreßzeit: 5 - 10 sec
Abkühlzeit: 20 sec
Kühlmedium: Kaltluft
minimale Zykluszeit: 20 sec
Prozeßtemperatur für PA-30GF: ca. 300°C

Das erfindungsgemäße Verfahren erweist sich durch die Verwendung flexibel einsetzbarer, geometrietoleranter Verstärkungsprofile bzw. Verstärkungselementes und die Vermeidung von Haftvermittlern oder irgendwelcher Klebstoffe als sehr effizient sowie als zeit- und kostensparend. Die haftsichere Verbindung zwischen den vorbestimmten Innenwandbereichen der offenen Hohlprofilstruktur des Bauteils und den Verstärkungsprofilen bzw. Verstärkungselementen wird allein durch werkstoffabhängige Haftungsmechanismen zwischen Bauteil und dem plastifizierten/aufgeschmolzenen Thermoplasten der Verstärkungsprofile bzw. Verstärkungselemente bewirkt. Beim Abkühlen des Verbundes geht die Thermoplastschicht der Verstärkungsprofile bzw. Verstärkungselemente eine haftsichere Verbindung mit dem Bauteil ein, die eine Kraftübertragung zur Verstärkung der offenen Hohlprofilstrukur des Bauteil bewirkt.

Die eingangs erwähnte offenen Hohlprofilstruktur eines Bauteils, insbesondere eines Kfz-Bauteils aus Metall zeichnet sich erfindungsgemäß dadurch aus, daß jedes Versteifungsprofil oder die Versteifungsprofilanordnung aus mindestens zwei stegartigen, plattenförmigen und jeweils mindestens eine Längskantennut aufweisenden geometrietoleranten Versteifungselementen (Halbzeugen) gebildet ist, bei denen zumindest der Außenmantel oder die Umhüllung von einer Thermoplastschicht gebildet ist und die spiegelbildlich an den Längskantennuten kreuzförmig mit Bewegungsspiel ineinandergesteckt sind, wobei die Versteifungsprofile zueinander beabstandet oder die Versteifungsprofilanordnung insgesamt in die offene Hohlprofilstruktur des Bauteils geometrietolerant eingedrückt, an den mit den vorbestimmten Innenwandbereichen der Hohlprofilstruktur des Bauteils verbundenen Bereichen der Verstärkungselemente an die Kontur der Innenwandbereiche angepaßt und haftsicher ohne Haftvermittler allein durch werkstoffabhängige Haftungsmechanismen (Hotmelt) zwischen Bauteil und der Thermoplastschicht der Verstärkungselemente befestigt sind. Die Versteifungselemente (Halbzeuge) können identisch sein.

Vorteilhafte Weiterbildungen der erfindungsgemäßen offenen Hohlstruktur eines Bauteils sind in den Patentansprüchen 17 bis 21 beschrieben.

Die Erfindung wird nun unter Bezug auf die Zeichnungen beschrieben. In diesen sind:
Fig. 1 eine perspektivische Ansicht zwei identischer, spiegelbildlich dargestellter Verstärkungselemente, die jeweils eine mittig ausgebildete Längskantennut aufweisen,
Fig. 2 eine perspektivische Ansicht eines erfindungsgemäß verwendeten Verstärkungsprofils, das durch kreuzförmiges Ineinanderstecken der beiden Verstärkungselemente nach Fig. 1 gebildet ist,
Fig. 3 eine Draufsicht einer schematisch dargestellten offenen Hohlprofilstruktur eines Bauteils, das erfindungsgemäß mit kreuzförmigen Verstärkungsprofilen nach Fig. 2 verstärkt worden ist,
Fig. 4 eine Draufsicht entsprechend der Fig. 4, wobei die schematisch dargestellte offene Hohlprofilstruktur des Bauteils zusätzlich mit stegartig angeordneten, plattenförmigen Verstärkungselementen verstärkt worden ist,
Fig. 5 eine perspektivische Ansicht eines erfindungsgemäß verwendbaren Verstärkungsprofils, das als sandwichartige Hybrid-Konstruktion aufgebaut ist,
Fig. 6 eine perspektivische Ansicht eines erfindungsgemäß verwendbaren Verstärkungsprofils, das als vollumhüllte Hybrid-Konstruktion ausgebildet ist, mit einer im Schnitt dargestellten Stirnfläche,
Fig. 7 eine perspektivische Ansicht zwei identischer, spiegelbildlich dargestellter Verstärkungselemente, die jeweils drei im Abstand zu einander angeordnete Längskantennuten aufweisen, und
Fig. 8 eine Draufsicht einer schematisch dargestellten offenen Hohlprofilstruktur eines Bauteils, die mit einer aus Verstärkungselementen nach Fig. 7 kreuzgitterförmig zusammengefügten Verstärkungsprofilanordnung verstärkt worden ist.

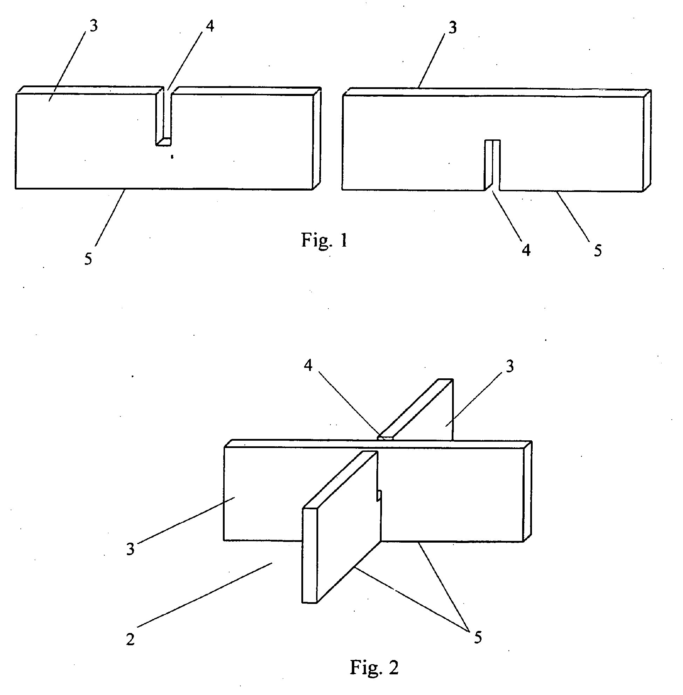

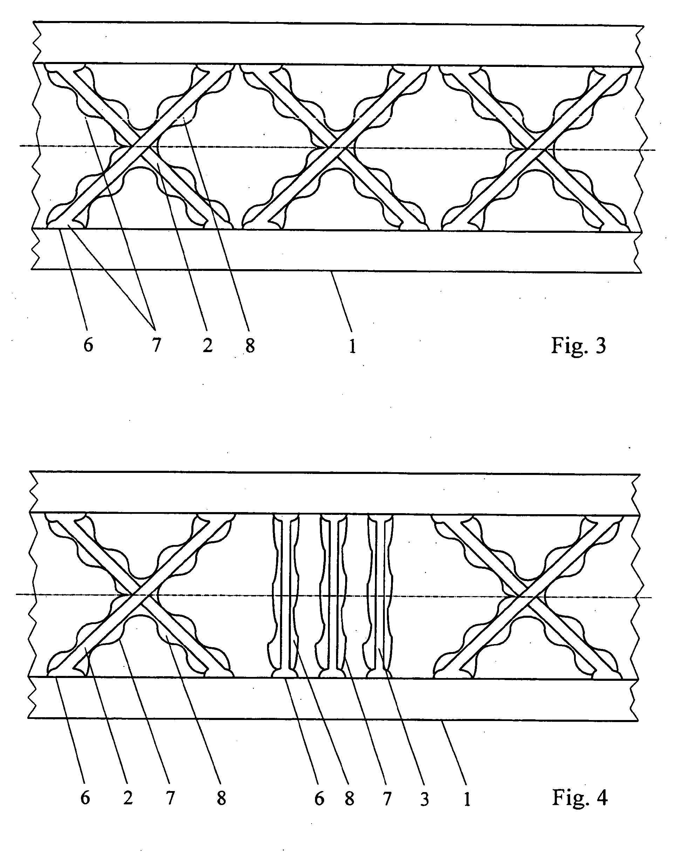

Wie aus den Fig. 1 bis 3 hervorgeht, wird gemäß einer Ausführungsform des Verfahrens eine in Fig. 3 schematisch dargestellte offene Hohlprofilstruktur 1 eines Bauteils durch eine Vielzahl kreuzförmiger Verstärkungsprofile 2 als Versteifungsprofile verstärkt, die jeweils aus zwei in Fig. 1 dargestellten Verstärkungselementen 3 gebildet sind. Die Verstärkungselemente 3 sind identisch plattenförmig gestaltet und jeweils mit einer Längskantennut 4 versehen, die mittig an der entsprechenden
Längskante 5 ausgebildet ist. Die beiden Verstärkungselemente 3 werden in spiegelbildlicher Zueinanderordnung an den mittigen Längskantennuten 4 kreuzförmig mit Bewegungsspiel unter Bildung des in Fig. 2 gezeigten kreuzförmigen Verstärkungsprofils 2 ineinandergesteckt.

Die Verstärkungselemente 3 gemäß Fig. 1 sind aus Kunststoff hergestellt und weisen zumindest als Außenmantel eine Thermoplastschicht auf. Bevorzugt werden Verstärkungselemente 3 und damit Verstärkungsprofile 2 verwendet, die aus verstärktem Polybutylenteraphthalat (PBT) oder gefülltem Polyamid hergestellt sind. Von Wichtigkeit ist, daß die Verstärkungsprofile 2 bzw. Verstärkungselemente 3 jeweils ein im Bereich von 0,4 mm bis 2,0 mm liegendes Übermaß im Vergleich zu ihrer jeweiligen Abmessung zwischen den zu bildenden Fixierstellen ihrer jeweils entgegengesetzten Enden an vorbestimmten Innenwandbereichen 6 (Fig. 3) der offenen Hohlprofilstruktur 1 des Bauteils aufweisen. Die Verstärkungsprofile 2 und Verstärkungselemente 3 sind daher geometrietolerant und in flexibler Weise geometrieunabhängig zur Verstärkung der Hohlprofilstruktur 1 des Bauteils in dieses einsetzbar.

Zur Verstärkung der offenen Hohlprofilstruktur 1 des Bauteils 2 mit den kreuzförmigen Verstärkungsprofilen 2 gemäß Fig. 2, die jeweils ein Bewegungsspiel im Bereich der sich kreuzenden Längskantennuten 4 aufweisen, werden zunächst vorbestimmten Innenwandbereiche 6 der offenen Hohlprofilstruktur 1 lokal erwärmt oder aber alternativ die Verstärkungsprofile 2 zunächst jeweils an den Bereichen 7 ihrer Thermoplastschicht 8, die mit den vorbestimmten Innenwandabschnitten 6 der offenen Hohlprofilstruktur 1 des Bauteils zu verbinden sind, lokal erwärmt und dabei gezielt aufgeschmolzen.

Im ersteren Fall werden, wie aus Fig. 3 zu ersehen ist, die kreuzförmigen Verstärkungsprofile 2 jeweils geometrietolerant zueinander beabstandet an den zuvor lokal erwärmten vorbestimmten Innenwandbereichen 6 in die offene Hohlprofilstruktur 1 des Bauteils mit einem bestimmten Anpreßdruck eingedrückt. Hierbei werden die Bereiche 7 der Thermoplastschicht 8 jedes Verstärkungsprofils 2, die mit den lokal erwärmten vorbestimmten Innenwandbereichen 6 der offenen Hohlprofilstruktur 1 des Bauteils zu verbinden sind, von diesen entsprechend lokal erwärmt und gezielt aufgeschmolzen.

Im oben erwähnten alternativen zweiten Fall werden die Verstärkungsprofile 2, die zuvor an den Bereichen 7 ihrer Thermoplastschicht 8, die mit den vorbestimmten Innenwandbereichen 6 der offenen Hohlprofilstruktur 1 des Bauteils zu verbinden sind, unmittelbar lokal erwärmt und dabei aufgeschmolzen worden sind, sofort anschließend an das gezielte Aufschmelzen in die offenen Hohlprofilstruktur 1 des Bauteils zur Fixierung an den vorbestimmten Innenwandbereichen 6 mit einem vorbestimmten Anpreßdruck eingedrückt.

Bei beiden genannten Verfahrensweisen wird jedes Verstärkungsprofil 2 beim Eindrücken in die offene Hohlprofilstruktur 1 des Bauteils geometrietolerant in die Fixierposition an den vorbestimmten Innenwandbereichen 6 der offenen Hohlprofilstruktur 1 des Bauteils bewegt und zugleich an diese konturenmäßig mit den plastifizierten Bereichen 7 seiner Thermoplastschicht 8 angepaßt. Unmittelbar anschließend wird in beiden Fällen der Verbund z.B. mit Kaltluft abgekühlt und jedes Verstärkungsprofil 2 ohne einen Haftvermittler mit den vorbestimmten Innenwandbereichen 6 der offenen Hohlprofilstruktur 1 des Bauteils diese versteifend haftsicher verbunden.

Das lokale Erwärmen der Innenwandbereiche 6 der offenen Hohlprofilstruktur 1 des Bauteils oder alternativ der Bereiche 7 der Thermoplastschicht 8 jedes Verstärkungsprofils 2, die mit den vorbestimmten Innenwandbereichen 6 der offenen Hohlprofilstruktur 1 des Bauteils zu verbinden sind, kann jeweils mittels Ofen, Laser, Flamme, Mikrowelle, Heißgas, induktiv oder infrarot erfolgen.

Wie aus Fig. 4 hervorgeht, können zur Verstärkung der offenen Hohlprofilstruktur 1 des Bauteils neben kreuzförmigen Verstärkungsprofilen 2 auch mehrere geometrietolerante plattenförmige Verstärkungselemente 3 im Abstand zueinander in der erfindungsgemäßen Verfahrensweise haftsicher mit den vorbestimmten Innenwandbereichen 6 der offenen Hohlprofilstruktur 1 des Bauteils verbunden werden.

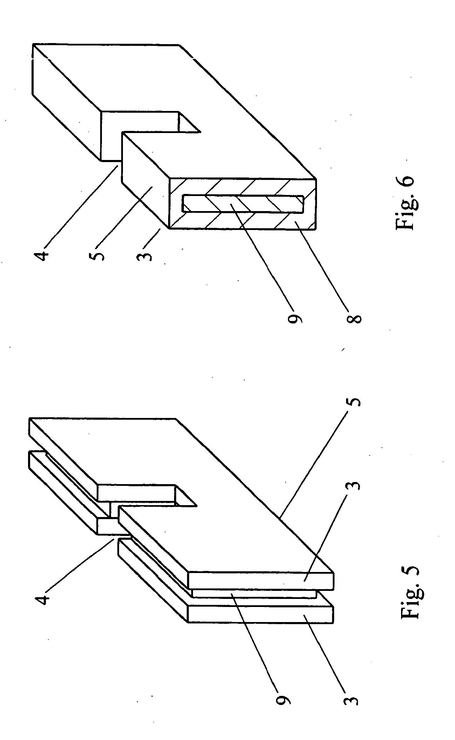

Aus den Fig. 5 und 6 gehen erfindungsgemäß verwendbare Verstärkungsprofile 2 hervor, die jeweils als Hybrid-Konstruktion gestaltet sind. Gemäß Fig. 5 ist die Hybrid-Konstruktion des Verstärkungsprofils 2 sandwichartig ausgebildet, wobei den Außenmantel 8 plattenförmige Elemente aus Thermoplast bilden, die das erforderliche Übermaß aufweisen, und der Kern 9 des Verstärkungsprofils 2 aus Duroplast, Elastomer oder einem Metall, z.B. Aluminium gebildet sein kann. Bei der Hybrid-Konstruktion des Verstärkungsprofils 2 gemäß Fig. 6 ist hingegen der Kern 9, der entsprechend wie bei der Ausführungsform nach Fig. 5 ausgebildet sein kann, von der aus Thermoplast gebildeten und das Übermaß aufweisenden Umhüllung 8 vollständig umfaßt.

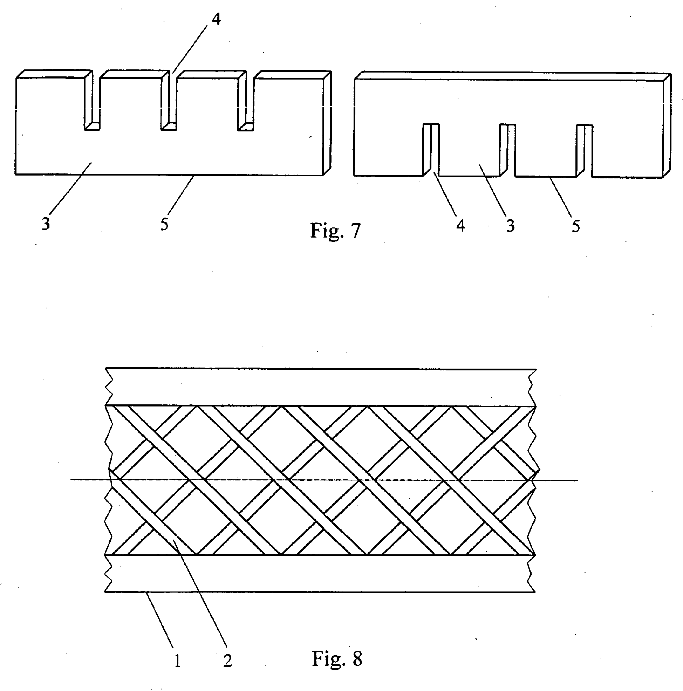

Fig. 7 zeigt schließlich zwei identische plattenförmige Verstärkungselemente 3 in spiegelförmiger Darstellung, die jeweils an einer entsprechenden Längskante 5 drei im Abstand zueinander angeordnete Längskantennuten 4 aufweisen. Durch Ineinanderstecken derartiger Verstärkungselemente 3 ist eine kreuzgitterförmige Verstärkungsprofilanordnung 2 zu gestalten, mit dem die Hohlprofilstruktur 1 des Bauteils entsprechend der zuvor beschriebenen Verfahrensweisen verstärkt werden kann, wie aus Fig. 8 zu ersehen ist.

## Patentansprüche

1. Verfahren zum Verstärken einer offenen Hohlprofilstruktur (1) eines Bauteils, insbesondere eines Kfz-Bauteils aus Metall, bei dem mehrere Verstärkungsprofile (2) entlang des Längsverlaufs der offenen Hohlprofilstruktur (1) des Bauteils in Abstand zueinander in dieses eingebracht und entgegengesetzte Enden jedes Verstärkungsprofils an zueinander entgegengesetzten Innenwandbereichen der offenen Hohlprofilstruktur (1) des Bauteils fixiert werden,
**dadurch gekennzeichnet, daß**
- geometrietolerante, zumindest als Umhüllung oder Außenmantel eine Thermoplastschicht aufweisende Verstärkungsprofile (2) verwendet werden, die jeweils ein im Bereich von 0,4 mm bis 2,0 mm liegendes Übermaß im Vergleich zur Abmessung jedes Verstärkungsprofils (2) zwischen zu bildenden Fixierstellen seiner entgegengesetzten Enden an vorbestimmten Innenwandbereichen (6) der offenen Hohlprofilstruktur (1) aufweisen,
- jedes Verstärkungsprofil (2) geometrietolerant in die zuvor an den vorbestimmten Innenwandbereichen (6) lokal erwärmte offene Hohlprofilstruktur (1) des Bauteils mit bestimmten Anpreßdruck eingedrückt wird,
- wobei die Bereiche der Thermoplastschicht jedes Verstärkungsprofils (2), die mit den lokal erwärmten vorbestimmten Innenwandbereichen (6) der offenen Hohlprofilstruktur (1) des Bauteils zu verbinden sind, von diesen entsprechend lokal erwärmt und gezielt aufgeschmolzen werden und
- dabei das Verstärkungsprofil (2) geometrietolerant in die Fixierposition an den vorbestimmten Innenwandbereichen (6) der offenen Hohlprofilstruktur (1) des Bauteils bewegt und zugleich an diese konturenmäßig mit den plastifizierten Bereichen seiner Thermoplastschicht angepaßt wird und
- unmittelbar anschließend der Verbund abgekühlt und jedes Verstärkungsprofil (2) ohne einen Haftvermittler mit den nunmehr abgekühlten vorbestimmten Innenwandbereichen der offenen Hohlprofilstruktur (1) des Bauteils diese versteifend haftsicher verbunden wird.

2. Verfahren zum Verstärken einer offenen Hohlprofilstruktur (1) eines Bauteils, insbesondere eines Kfz-Bauteils aus Metall, bei dem mehrere Verstärkungsprofile (2) entlang des Längsverlaufs der offenen Hohlprofilstruktur (1) des Bauteils in Abstand zueinander in dieses eingebracht und entgegengesetzte Enden jedes Verstärkungsprofils (2) an zueinander entgegengesetzten Innenwandbereichen (6) der offenen Hohlprofilstruktur (1) des Bauteils fixiert werden,
**dadurch gekennzeichnet, daß**
- geometrietolerante, zumindest als Umhüllung oder Außenmantel eine Thermoplastschicht aufweisende Verstärkungsprofile (2) verwendet werden, die jeweils ein im Bereich von 0,4 mm bis 2,0 mm liegendes Übermaß im Vergleich zur Abmessung des jeweiligen Verstärkungsprofils (2) zwischen den zu bildenden Fixierstellen seiner entgegengesetzten Enden an vorbestimmten Innenwandbereichen (6) der offenen Hohlprofilstruktur (1) des Bauteils aufweisen,
- jedes Verstärkungsprofil (2) an den Bereichen seiner Thermoplastschicht, die mit den vorbestimmten Innenwandbereichen (6) der offenen Hohlprofilstruktur (1) des Bauteils zu verbinden sind, unmittelbar lokal erwärmt und dabei gezielt aufgeschmolzen und
- sofort anschließend in die offene Hohlprofilstruktur (1) des Bauteils zur Fixierung an den vorbestimmten Innenwandbereichen (6) mit vorbestimmten Anpreßdruck eingedrückt wird,
- wobei das Verstärkungsprofil (2) geometrietolerant in die Fixierposition an den vorbestimmten Innenwandbereichen (6) der offenen Hohlprofilstruktur (1) des Bauteils bewegt und zugleich an diese konturenmäßig mit den plastifizierten Bereichen seiner Thermoplastschicht angepaßt wird und
- unmittelbar anschließend der Verbund abgekühlt und jedes Verstärkungsprofil (2) ohne einen Haftvermittler mit den vorbestimmten Innenwandbereichen (6) der offenen Hohlprofilstruktur (1) des Bauteils diese versteifend haftsicher verbunden wird.

3. Verfahren nach Anspruch 1 oder 2, **dadurch gekennzeichnet, daß** stabförmige und/oder plattenförmige Verstärkungselemente (3) als Verstärkungsprofile (2) verwendet werden.

4. Verfahren nach Anspruch 1 oder 2, **dadurch gekennzeichnet, daß** Verstärkungsprofile (2) bzw. Verstärkungselemente (3) beliebiger Kontur verwendet werden.

5. Verfahren nach einem der Ansprüche 1 bis 4, **dadurch gekennzeichnet, daß** aus mehreren Verstärkungselementen (3) gebildete Verstärkungsprofile (2) verwendet werden.

6. Verfahren nach Anspruch 1, **dadurch gekennzeichnet, daß** jedes Verstärkungsprofil (2) oder eine Verstärkungsprofilanordnung (2) aus mindestens zwei stegartigen, plattenförmigen und jeweils mindestens eine Längskantennut (4) aufweisenden geometrietoleranten Halbzeugen (3) als Verstärkungselementen zusammengesetzt wird, indem diese spiegelbildlich an den Längskantennuten (4) kreuzförmig mit Bewegungsspiel ineinander gesteckt werden derart, daß die Halbzeuge (3) des kreuzförmige Verstärkungsprofils (2) sich jeweils nach gezielter Plastifizierung ihrer thermoplastischen Verbundbereiche (7) beim Eindrücken in die offene Hohlprofilstruktur (1) des Bauteils in die Fixierposition bewegen und sich dabei an die Kontur der entsprechenden Innenwandbereiche (6) der offenen Hohlprofilstruktur (1) des Bauteils anpassen und beim anschließende Abkühlen der Verbundbereiche (7) ohne Haftvermittler haftsicher mit den entsprechenden Innenwandbereichen (6) der offenen Hohlprofilstruktur (1) des Bauteils verbunden werden.

7. Verfahren nach Anspruch 6, **dadurch gekennzeichnet, daß** die Verstärkungsprofile jeweils aus zwei stegartigen, plattenförmigen identischen Halbzeugen (3) als Verstärkungselementen kreuzförmig zusammengesetzt werden, deren Längskantennut (4) jeweils mittig in der entsprechenden Längskante des Halbzeugs (3) ausgebildet ist.

8. Verfahren nach Anspruch 6, **dadurch gekennzeichnet, daß** mehr als zwei stegartige, plattenförmige Verstärkungselemente (3), die jeweils eine gleiche Anzahl identisch ausgebildeter Längskantennuten aufweisen, die im Abstand zueinander an der entsprechenden Längskante jedes Verstärkungselementes (3) ausgebildet sind, zu einer kreuzgitterförmigen Verstärkungsprofilanordnung der offenen Hohlprofilstruktur (1) des Bauteils zusammengefügt werden.

9. Verfahren nach einem der Ansprüche 1 bis 8, **dadurch gekennzeichnet, daß** Verstärkungsprofile (2) bzw. Verstärkungselemente (3) verwendet werden, die aus verstärktem oder ungefülltem Polybutylenteraphthalat (PBT) hergestellt sind

10. Verfahren nach einem der Ansprüche 1 bis 8, **dadurch gekennzeichnet, daß** Verstärkungsprofile (2) bzw. Verstärkungselemente (3) verwendet werden, die aus gefülltem Polyamid hergestellt sind.

11. Verfahren nach einem der Ansprüche 1 bis 8, **dadurch gekennzeichnet, daß** Verstärkungsprofile bzw. Verstärkungselemente verwendet werden, die als sandwichartige Hybrid-Konstruktion ausgebildet sind, wobei der Außenmantel (8) oder die Umhüllung der Hybrid-Konstruktion aus Thermoplast und deren Kern (9) aus Duroplast, Elastomer oder einem Metall gebildet ist und nur der Außenmantel (8) oder die Umhüllung der Hybrid-Konstruktion das Übermaß aufweist

12. Verfahren nach Anspruch 1, **dadurch gekennzeichnet, daß** das lokale Erwärmen der vorbestimmten Innenwandbereiche (6) der offenen Hohlprofilstruktur (1) des Bauteils mittels Ofen, Laser, Flamme, Mikrowelle, Heißgas, induktiv oder infrarot erfolgt.

13. Verfahren nach Anspruch 2. **dadurch gekennzeichnet, daß** das unmittelbare lokale Erwärmen der Verstärkungsprofile (2) bzw. Verstärkungselemente (3) vor deren Einbringung in die offene Hohlprofilstruktur (1) des Bauteils mittels Ofen, Laser, Flamme, Mikrowelle, Heißgas, induktiv oder infrarot erfolgt.

14. Verfahren nach einem der Ansprüche 1 bis 13, **dadurch gekennzeichnet, daß** die geometrietoleranten Verstärkungsprofile (2) bzw. Verstärkungselemente (3) mittels Roboter taktmäßig in die offene Hohlprofilstruktur (1) des Bauteils an deren entsprechenden vorbestimmten Innenwandbereichen (6) in die jeweilige Fixierposition gedrückt werden.

15. Verfahren zum Verstärken einer offenen Hohlprofilstruktur (1) eines Bauteils aus metallischem Blech nach einem der vorhergehenden Ansprüche 1 bis 8, 10 und 12 bis 14, **gekennzeichnet durch** die Wahl folgender
Parameter:
Material der Verstärkungsprofile (2) bzw. Verstärkungselemente (3) 30% glasfasergefülltes Polyamid (PA-30GF)
Zeit der lokalen Aufheizung des Bauteils: induktiv ca. 5 sec, offene Flamme ca. 60 sec Fügezeit/Anpresszeit: 5 - 10 sec
Abkühlzeit: 20 sec
Kühlmittel: Kaltluft
minimale Zykluszeit: 20 sec
Prozeßtemperatur für PA-30GF: ca. 300°C

16. Offene Hohlprofilstruktur (1) eines Bauteils, insbesondere eines Kfz-Bauteils aus Metall, dessen Innenraum Versteifungsprofile (2) aufweist, die mit der Innenwand der Hohlprofilstruktur (1) fest verbunden sind,
**dadurch gekennzeichnet, daß**
jedes Versteifungsprofil (2) oder eine Versteifungsprofilanordnung (2) aus mindestens zwei stegartigen, plattenförmigen und jeweils mindestens eine Längskantennut (4) aufweisenden geometrietoleranten Verstärkungselementen (3) als Halbzeugen gebildet sind, die zumindest als Außenmantel (8) oder Umhüllung eine Thermoplastschicht (8) aufweisen und spiegelbildlich an den Längskantennuten (4) kreuzförmig mit Bewegungsspiel ineinander gesteckt sind , wobei die Versteifungsprofile (2) zueinander beabstandet in die offene Hohlprofilstruktur (1) des Bauteils geometrietolerant eingedrückt, an den mit den vorbestimmten Innenwandbereichen (6) letzterer verbundenen Bereichen (7) der Verstärkungselemente (3) an die Kontur der Innenwandbereiche (6) angepaßt und haftsicher ohne Haftvermittler allein durch werkstoffabhängige Haftungsmechanismen zwischen Holprofilstruktur (1) und der Thermoplastschicht (8) der Verstärkungselemente (3) befestigt sind.

17. Offene Hohlprofilstruktur eines Bauteils nach Anspruch 16, **dadurch gekennzeichnet, daß** die Verstärkungsprofile (2) jeweils aus zwei stegartigen, plattenförmigen Versteifungselementen als Halbzeugen (3) kreuzförmig mit Bewegungsspiel zusammengesetzt sind, deren Länskantennut (4) jeweils identisch mittig in der entsprechenden Längskante (5) des Halbzeugs (3)ausgebildet sind.

18. Offene Hohlprofilstruktur eines Bauteils nach Anspruch 16, **dadurch gekennzeichnet, daß** mehr als zwei stegartige, plattenförmige Verstärkungselementeds (3), die eine gleiche Anzahl identisch ausgebildeter Längskantennuten (4) aufweisen, die im Abstand zueinander an der entsprechenden Längskante (5) jedes Verstärkungselementes (3) ausgebildet sind, zu der kreuzgitterförmigen Verstärkungsprofilstruktur der offenen Hohlprofilstruktur (1) des Bauteils zusammengefügt sind.

19. Offene Hohlprofilstruktur eines Bauteils nach einem der Ansprüche 16 bis 18, **dadurch gekennzeichnet, daß** die Verstärkungsprofile (2) bzw. Verstärkungselemente (3) aus verstärktem oder ungefülltem Polybutylenteraphtalat bestehen.

20. Offene Hohlprofilstruktur eines Bauteils nach einem der Ansprüche 16 bis 18, **dadurch gekennzeichnet, daß** die Verstärkungsprofile (2) bzw. Verstärkungselemente (3) aus gefülltem Polyamid bestehen.

21. Offene Hohlprofilstruktur eines Bauteils nach einem der Ansprüche 16 bis 20, **dadurch gekennzeichnet, daß** die Verstärkungsprofile (2) bzw. Verstärkungselemente (3) als sandwichartige Hybrid-Konstruktion ausgebildet sind, wobei der Außenmantel oder die Umhüllung (8) der Hybrid-Konstruktion aus Thermoplast und deren Kern (9) aus Duroplast, Elastomer oder einem Metall gebildet ist und nur der Außenmantel oder die Umhüllung (8) der Hybrid-Konstruktion das Übermaß aufweist.

## Claims

1. A method for reinforcing an open hollow profile structure (1) of a component, in particular of a motor vehicle component made of metal, where a plurality of reinforcement profiles (2) are introduced into said hollow profile along the longitudinal direction of the open hollow profile structure (1) of the component at a distance to one another and where opposite ends of each reinforcement profile are fixed at inner wall areas of the open hollow profile structure (1) of the component, which are opposite to one another,
**characterized in that**
- geometrically tolerant reinforcement profiles (2) are used, which encompass a thermoplast layer at least as casing or outer jacket and which in each case encompass an excess in the range of from 0.4 mm to 2.0 mm as compared to the dimensions of each reinforcement profile (2) between the fixing locations, which are to be formed, of its opposite ends at predetermined inner wall areas (6) of the open hollow profile structure (1),
- each reinforcement profile (2) is pressed into the open hollow profile structure (1) of the component, which is locally heated at the predetermined inner wall areas (6), with a certain contact pressure,
- wherein the areas of the thermoplast layer of each reinforcement profile (2), which are to be connected to the locally heated predetermined inner all areas (6) of the open hollow profile structure (1) of the component, are locally heated by said component in a corresponding manner and are melted in a specific manner and
- the reinforcement profile (2) is thereby moved into the fixing position at the predetermined inner wall areas (6) of the open hollow profile structure (1) of the component in a geometrically tolerant manner and is, at the same time, adapted thereto with reference to its contour with the plasticized areas of its thermoplast layer and
- the interconnection is immediately cooled afterwards and each reinforcement profile (2) is connected in an adhesion-proof manner to the now cooled predetermined inner wall areas of the open hollow profile structure (1) of the component without an adhesion promoter so as to reinforce said hollow profile structure (1).

2. The method for reinforcing an open hollow profile structure (1) of a component, in particular of a vehicle component made of metal, where a plurality of reinforcement profiles (2) are introduced into said hollow profile along the longitudinal direction of the open hollow profile structure (1) of the component at a distance to one another and where opposite ends of each reinforcement profile (2) are fixed at inner wall areas (6) of the open hollow profile structure (1) of the component, which are opposite to one another,
**characterized in that**
- geometrically tolerant reinforcement profiles (2) are used, which encompass a thermoplast layer at least as casing or outer jacket and which in each case encompass an excess in the range of from 0.4 mm to 2.0 mm as compared to the dimensions of each reinforcement profile (2) between the fixing locations, which are to be formed, of its opposite ends at predetermined inner wall areas (6) of the open hollow profile structure (1) of the component,
- each reinforcement profile (2) is immediately locally heated and is thereby melted in a specific manner at the areas of its thermoplast layer, which are to be connected to the predetermined inner wall areas (6) of the open hollow profile structure (1) of the component and
- is pressed into the open hollow profile structure (1) of the component for fixing to the predetermined inner wall areas (6) with a predetermined contact pressure immediately afterwards,
- wherein the reinforcement profile (2) is moved into the fixing position at the predetermined inner wall areas (6) of the open hollow profile structure (1) of the component in a geometrically tolerant manner and is, at the same time, adapted thereto with reference to its contour with the plasticized areas of its thermoplast layer and
- the interconnection is immediately cooled afterwards and each reinforcement profile (2) is connected in an adhesion-proof manner to the predetermined inner wall areas (6) of the open hollow profile structure (1) of the component without an adhesion promoter so as to reinforce said hollow profile structure (1).

3. The method according to claim 1 or 2, **characterized in that** rod-shaped and/or disk-shaped reinforcement elements (3) are used as reinforcement profiles (2).

4. The method according to claim 1 or 2, **characterized in that** reinforcement profiles (2) and reinforcement elements (3), respectively, of any contour are used.

5. The method according to one of claims 1 to 4, **characterized in that** reinforcement profiles (2), which are formed from a plurality of reinforcement elements (3), are used.

6. The method according to claim 1, **characterized in that** each reinforcement profile (2) or a reinforcement profile arrangement (2) is assembled from at least two geometrically tolerant semi-finished products (3), which are embodied in a bar-like, disk-shaped manner and each of which encompass at least one longitudinal edge groove (4) as reinforcement elements, **in that** said semi-finished products are inserted into one another in a laterally reversed manner at the longitudinal edge grooves (4) in a crosswise manner with an active game in such a manner that the semi-finished products (3) of the crosswise reinforcement profile (2) in each case move into the fixing position after a specific plasticizing of their thermoplast interconnection areas (7) in response to impressing into the open hollow profile structure (1) of the component and thereby adapt to the contour of the corresponding inner wall areas (6) of the open hollow profile structure (1) of the component and are connected in an adhesion-proof manner to the corresponding inner wall areas (6) of the open hollow profile structure (1) of the component in response to the subsequent cooling of the interconnection areas (7).

7. The method according to claim 6, **characterized in that** the reinforcement profiles are in each case assembled from two bar-like, disk-shaped, identical semi-finished products (3) as reinforcement elements in a crosswise manner, the longitudinal edge grooves (4) of which are in each case embodied centrally in the corresponding longitudinal edge of the semi-finished product (3).

8. The method according to claim 6, **characterized in that** more than two bar-like, disk-shaped reinforcement elements (3), each of which encompass the same number of identically embodied longitudinal edge grooves, which are embodied at a distance to one another at the corresponding longitudinal edge of each reinforcement element (3), are joined to form a cross grid-shaped reinforcement profile arrangement of the open hollow profile structure (1) of the component.

9. The method according to one of claims 1 to 8, **characterized in that** reinforcement profiles (2) and reinforcement elements (3), respectively, which are made from reinforced or unfilled polybutyleneteraphthalate (PBT), are used.

10. The method according to one of claims 1 to 8, **characterized in that** reinforcement profiles (2) and reinforcement elements (3), respectively, which are made of filled polyamide, are used.

11. The method according to one of claims 1 to 8, **characterized in that** reinforcement profiles and reinforcement elements, respectively, which are embodied as sandwich-like hybrid construction, are used, wherein the outer jacket (8) or the casing of the hybrid construction is formed from thermoplast and the core (9) thereof is formed from thermosetting material, elastomer or a metal and only the outer jacket (8) or the casing of the hybrid construction encompasses the excess.

12. The method according to claim 1, **characterized in that** the local heating of the predetermined inner wall areas (6) of the open hollow profile structure (1) of the component is carried out in an inductive or infrared manner by means of furnace, laser, flame, microwave, hot gas.

13. The method according to claim 2, **characterized in that** the immediate local heating of the reinforcement profiles (2) and reinforcement elements (3), respectively, is carried out prior to the introduction thereof into the open hollow profile structure (1) of the component in an inductive or infrared manner by means of furnace, laser, flame, microwave, hot gas.

14. The method according to one of claims 1 to 13, **characterized in that** the geometrically tolerant reinforcement profiles (2) and reinforcement elements (3), respectively, are pressed into the respective fixing position by means of robots at regular intervals in the open hollow profile structure (1) of the component at the corresponding predetermined inner wall areas (6) of said hollow profile structure.

15. A method for reinforcing an open hollow profile structure (1) of a component made of a metallic sheet according to one of the preceding claims 1 to 8, 10, and 12 to 14, **characterized by** the selection of the following parameters:
material of the reinforcement profiles (2) and reinforcement elements (3), respectively: 30% fiberglass-filled polyamide (PA-30GF)
time of the local heating of the component: inductively approx. 5 sec., open flame approx. 60 sec.
joining time/pressing time: 5-10 sec.
cooling time: 20 sec.
coolant: cooling air
minimal cycle time: 20 sec.
process temperature for PA-30GF: approx. 300°C.

16. An open hollow profile structure (1) of a component, in particular of a vehicle component made of metal, the interior of which encompasses reinforcement profiles (2), which are fixedly connected to the inner wall of the hollow profile structure (1),
**characterized in that** each reinforcement profile (2) or a reinforcement profile arrangement (2) are assembled from at least two geometrically tolerant reinforcement elements, which are embodied in a bar-like, disk-shaped manner and each of which encompass at least one longitudinal edge groove (4) as semi-finished products (3), which encompass a thermoplast layer (8) at least as outer jacket (8) or as casing and which are inserted into one another in a laterally reversed manner at the longitudinal edge grooves (4) in a crosswise manner with an active game, wherein the reinforcement profiles (2), pressed into the open hollow profile structure (1) of the component in a geometrically tolerant manner at a distance to one another, are adapted to the contour of the inner wall areas (6) at the areas (7) of the reinforcement elements (3), which are connected to the predetermined inner wall areas (6) of the hollow profile structure (1), and are fixed in an adhesion-proof manner without adhesion promoter solely by means of material-dependent adhesion mechanisms between hollow profile structure (1) and the thermoplast layer (8) of the reinforcement elements (3).

17. An open hollow profile structure of a component according to claim 16, **characterized in that** the reinforcement profiles (2) are in each case assembled from two bar-like, disk-shaped reinforcement elements as semi-finished products (3) in a crosswise manner with an active game, the longitudinal edge groove (4) of which are in each case embodied so as to be identically centrical in the corresponding longitudinal edge (5) of the semi-finished product (3).

18. The open hollow profile structure of a component according to claim 16, **characterized in that** more than two bar-like, disk-shaped reinforcement elements (3), which encompass a same number of identically embodied longitudinal edge grooves (4), which are embodied at a distance to one another at the corresponding longitudinal edge (5) of each reinforcement element (3) are assembled to form the cross grid-shaped reinforcement profile structure of the open hollow profile structure (1) of the component.

19. The open hollow profile structure of a component according to one of claims 16 to 18, **characterized in that** the reinforcement profiles (2) and reinforcement elements (3), respectively, consist of reinforced or unfilled polybutyleneteraphthalate.

20. The open hollow profile structure of a component according to one of claims 16 to 18, **characterized in that** the reinforcement profiles (2) and reinforcement elements (3), respectively, consist of filled polyamide.

21. The open hollow profile structure of a component according to one of claims 16 to 20, **characterized in that** the reinforcement profiles (2) and reinforcement elements (3), respectively, are embodied as sandwich-like hybrid constructions, wherein the outer jacket or the casing (8) of the hybrid construction is formed from thermoplast and the core (9) thereof is formed from thermosetting material, elastomer or a metal and wherein only the outer jacket or the casing (8) of the hybrid construction encompasses the excess.

## Revendications

1. Procédé pour renforcer une structure ouverte de profil creux ouverte (1) d'un composant, en particulier d'un composant automobile à base de métal, dans lequel plusieurs profils de renforcement (2) sont introduits le long du tracé longitudinal de la structure ouverte de profil creux (1) du composant à distance les uns les autres dans celui-ci et des extrémités opposées de chaque profil de renforcement sont fixées sur des zones de paroi intérieure opposées les unes par rapport aux autres de la structure ouverte de profil creux (1) du composant,
**caractérisé en ce que**
- des profils de renforcement (2) tolérants au niveau de la géométrie, présentant une couche de thermoplastique au moins comme revêtement ou enveloppe extérieure, sont utilisés, lesquels présentent chacun une surcote située dans la plage de 0,4 mm jusqu'à 2,0 mm par rapport à la dimension de chaque profil de renforcement (2) entre des points de fixation à former de ses extrémités opposées sur des zones de paroi intérieure (6) prédéfinies de la structure ouverte de profil creux (1),
- chaque profil de renforcement (2) étant enfoncé de façon tolérante au niveau de la géométrie dans la structure de profil creux (1), ouverte, réchauffée localement auparavant sur les zones de paroi intérieure (6) prédéfinies, du composant avec une pression d'appui définie,
- les zones de la couche thermoplastique de chaque profil de renforcement (2), qui doivent être reliées avec les zones de paroi intérieure (6) prédéfinies et réchauffées localement, de la structure ouverte de profil creux (1) du composant, étant réchauffées localement en fonction de ces zones et étant fondues de façon ciblée et
- le profil de renforcement (2) étant déplacé de façon tolérante au niveau de la géométrie dans la position de fixation sur les zones de paroi intérieure (6) prédéfinies de la structure ouverte de profil creux (1) du composant et étant adapté en même temps au niveau des contours à ces zones avec les zones plastifiées de sa couche de thermoplastique et
- la liaison étant refroidie ensuite directement et chaque profil de renforcement (2) étant relié sans un agent adhésif avec les zones de paroi intérieure prédéfinies et désormais refroidies, de la structure de profil creux (1) ouverte du composant en les rigidifiant et de façon sûre au niveau de l'adhérence.

2. Procédé pour renforcer une structure ouverte de profil creux (1) d'un composant, en particulier d'un composant automobile à base de métal, dans lequel plusieurs profils de renforcement (2) sont introduits le long du tracé longitudinal de la structure ouverte de profil creux (1) du composant à distance les uns des autres dans ce composant et des extrémités opposées de chaque profil de renforcement (2) étant fixées sur des zones de paroi intérieure (6), opposées les unes aux autres, de la structure ouverte de profil creux (1) du composant,
**caractérisé en ce que**
- des profils de renforcement (2) tolérants au niveau de la géométrie, présentant au moins comme revêtement ou enveloppe extérieure une couche de thermoplastique, sont utilisés, lesquels présentent à chaque fois une surcote située dans la plage de 0,4 mm à 2,0 mm par rapport à la dimension du profil de renforcement (2) respectif entre les points de fixation à former de ses extrémités opposées sur des zones de paroi intérieure (6) prédéfinies de la structure ouverte de profil creux (1) du composant,
- chaque profil de renforcement (2) étant chauffé directement localement sur les zones de sa couche de thermoplastique, qui doivent être reliées avec les zones de paroi intérieure (6) prédéfinies de la structure ouverte de profil creux (1) du composant, et étant fondu ainsi de façon ciblée et
- étant enfoncé immédiatement ensuite dans la structure ouverte de profil creux (1) du composant pour la fixation sur les zones de paroi intérieure (6) prédéfinies avec une pression d'appui prédéfinie,
- le profil de renforcement (2) étant déplacé de façon tolérante au niveau de la géométrie dans la position de fixation sur les zones de paroi intérieure (6) prédéfinies de la structure ouverte de profil creux (1) du composant et étant adapté en même temps à ces zones au niveau des contours avec les zones plastifiées de sa couche thermoplastique et
- la liaison étant refroidie ensuite directement et chaque profil de renforcement (2) étant relié sans un agent adhésif avec les zones de paroi intérieure (6) prédéfinies de la structure ouverte de profil creux (1) du composant en rigidifiant ces zones et de façon sûre au niveau de l'adhérence.

3. Procédé selon la revendication 1 ou 2, **caractérisé en ce que** des éléments de renforcement (3) en forme de bâton et/ou de plaque sont utilisés comme profils de renforcement (2).

4. Procédé selon la revendication 1 ou 2, **caractérisé en ce que** des profils de renforcement (2) ou des éléments de renforcement (3) de contour quelconque sont utilisés.

5. Procédé selon l'une quelconque des revendications 1 à 4, **caractérisé en ce que** des profils de renforcement (2) formés à partir de plusieurs éléments de renforcement (3) sont utilisés.

6. Procédé selon la revendication 1, **caractérisé en ce que** chaque profil de renforcement (2) ou un agencement de profil de renforcement (2) constitué d'au moins deux demi-produits (3) tolérants au niveau de la géométrie, de type nervure, en forme de plaque, et présentant à chaque fois au moins une rainure d'arête longitudinale (4) comme éléments de renforcement est assemblé, alors que ces éléments sont emboîtés les uns dans les autres de façon symétrique sur les rainures d'arête longitudinale (4) en forme de croix avec une latitude de mouvement, de sorte que les demi-produits (3) du profil de renforcement (2) en forme de croix se déplacent chaque fois après une plastification adéquate de leurs zones d'assemblage (7) thermoplastiques lors de l'enfoncement dans la structure ouverte de profil creux (1) du composant dans la position de fixation et s'adaptent alors au contour des zones de paroi intérieure (6) correspondantes de la structure de profil creux (1) ouverte du composant et sont reliés lors du refroidissement consécutif des zones d'assemblage (7) sans agent adhésif de façon sûre au niveau de l'adhérence avec les zones de paroi intérieure (6) correspondantes de la structure ouverte de profil creux (1) du composant.

7. Procédé selon la revendication 6, **caractérisé en ce que** les profils de renforcement sont assemblés à chaque fois en forme de croix à partir de deux demi-produits (3) de type nervure, en forme de plaque et identiques comme éléments de renforcement, dont la rainure d'arête longitudinale (4) est conçue à chaque fois au centre dans l'arête longitudinale correspondante du demi-produit (3).

8. Procédé selon la revendication 6, **caractérisé en ce que** plus de deux éléments de renforcement (3) de type rainure et en forme de plaque, qui présentent à chaque fois un nombre égal de rainures d'arêtes longitudinales conçues de façon identique, lesquelles sont réalisées à distance les unes des autres sur l'arête longitudinale correspondante de chaque élément de renforcement (3), sont assemblés pour former un agencement de profil de renforcement en forme de grille croisée de la structure ouverte de profil creux (1) du composant.

9. Procédé selon l'une quelconque des revendications 1 à 8, **caractérisé en ce que** des profils de renforcement (2) ou des éléments de renforcement (3) sont utilisés, lesquels sont fabriqués à base de polybutylènetéréphtalate (PBT) renforcé ou non rempli.

10. Procédé selon l'une quelconque des revendications 1 à 8, **caractérisé en ce que** des profils de renforcement (2) ou des éléments de renforcement (3) sont utilisés, lesquels sont fabriqués à base de polyamide rempli.

11. Procédé selon l'une quelconque des revendications 1 à 8, **caractérisé en ce que** des profils de renforcement (2) ou des éléments de renforcement sont utilisés, lesquels sont conçus comme une construction hybride de type sandwich, l'enveloppe extérieure (8) ou le revêtement de la construction hybride étant conçu(e) à base de thermoplastique et son noyau (9) à base de duroplaste, d'élastomère ou d'un métal et seule l'enveloppe extérieure (8) ou le revêtement de la construction hybride présentant la surcote.

12. Procédé selon la revendication 1, **caractérisé en ce que** le réchauffement local des zones de paroi intérieure (6) prédéfinies de la structure ouverte de profil creux (1) du composant s'effectue par four, laser, flamme, micro-ondes, gaz de chauffage, de façon inductive ou par infrarouge.

13. Procédé selon la revendication 2, **caractérisé en ce que** le réchauffement local direct des profils de renforcement (2) ou des éléments de renforcement (3) s'effectue avant leur introduction dans la structure ouverte de profil creux (1) du composant par four, laser, flamme, micro-ondes, gaz de chauffage, de façon inductive ou par infrarouge.

14. Procédé selon l'une quelconque des revendications 1 à 13, **caractérisé en ce que** les profils de renforcement (2) ou éléments de renforcement (3) tolérants au niveau de la géométrie sont appuyés au moyen de robots par cycle dans la structure ouverte de profil creux (1) du composant sur ses zones de paroi intérieure (6) prédéfinies et correspondantes dans la position de fixation respective.

15. Procédé pour renforcer une structure ouverte de profil creux (1) d'un composant à base de tôle métallique selon l'une quelconque des revendications précédentes 1 à 8, 10 et 12 à 14, **caractérisé par** le choix des paramètres suivants :
matériau des profils de renforcement (2) ou des éléments de renforcement (3) 30 % de polyamide rempli de fibre de verre (PA-30GF)
temps de réchauffement local du composant : par induction environ 5 sec, flamme ouverte environ 60 sec
temps d'assemblage/pression : 5 à 10 sec
temps de refroidissement : 20 sec
agent réfrigérant : air froid
temps de cycle minimum : 20 sec
température de processus pour PA-30GF : environ 300°C.

16. Structure ouverte de profil creux (1) d'un composant, en particulier d'un composant automobile à base de métal, dont l'espace intérieur présente des profils de renforcement (2) qui sont reliés de façon fixe à la paroi interne de la structure de profil creux (1),
**caractérisée en ce que**
chaque profil de renforcement (2) ou un agencement de profil de renforcement (2) est formé à partir d'au moins deux éléments de renforcement tolérants au niveau de la géométrie, de type rainure, en forme de plaque et présentant à chaque fois au moins une rainure d'arête longitudinale (4) comme demi-produits (3), lesquels présentent au moins comme enveloppe extérieure (3) ou revêtement une couche de thermoplastique (8) et sont emboîtés les uns les autres de façon symétrique sur les rainures d'arête longitudinale (4) en forme de croix avec une latitude de mouvement, les profils de renforcement (2) étant enfoncés à distance les uns des autres dans la structure ouverte de profil creux (1) du composant, étant adaptés sur les zones (7), reliées aux zones de paroi intérieure (6) prédéfinies de la structure, des éléments de renforcement (3) au contour des zones de paroi intérieure (6) et étant fixés de façon sûre au niveau de l'adhérence sans agent adhésif uniquement par des mécanismes d'adhérence dépendants du matériau entre la structure de profil creux (1) et la couche de thermoplastique (8) des éléments de renforcement (3).

17. Structure ouverte de profil creux d'un composant selon la revendication 16, **caractérisée en ce que** les profils de renforcement (2) sont assemblés chacun en forme de croix avec une latitude de mouvement à partir de deux éléments de renforcement de type nervure, en forme de plaque, comme demi-produits (3), dont les rainures d'arête longitudinale (4) sont conçues à chaque fois de façon identique au centre dans l'arête longitudinale (5) correspondante du demi-produit (3).

18. Structure ouverte de profil creux d'un composant selon la revendication 16, **caractérisée en ce que** plus de deux éléments de renforcement (3) de type rainure et en forme de plaque, qui présentent un nombre égal de rainures d'arête longitudinale (4) conçues de façon identique, lesquelles sont réalisées à distance les unes des autres sur l'arête longitudinale (5) correspondante de chaque élément de renforcement (3), sont assemblés pour former la structure de profil de renforcement en forme de grille croisée de la structure ouverte de profil creux (1) du composant.

19. Structure ouverte de profil creux d'un composant selon l'une quelconque des revendications 16 à 18, **caractérisée en ce que** les profils de renforcement (2) ou éléments de renforcement (3) sont à base de polybutylènetéréphtalate renforcé ou non rempli.

20. Structure ouverte de profil creux d'un composant selon l'une quelconque des revendications 16 à 18, **caractérisée en ce que** les profils de renforcement (2) ou éléments de renforcement (3) sont à base de polyamide chargé.

21. Structure ouverte de profil creux d'un composant selon l'une quelconque des revendications 16 à 20, **caractérisée en ce que** les profils de renforcement (2) ou éléments de renforcement (3) sont conçus sous forme de construction hybride de type sandwich, l'enveloppe extérieure ou le revêtement (8) de la construction hybride étant formé à base de thermoplastique et son noyau (9) à base de duroplaste, d'élastomère ou d'un métal et seule l'enveloppe extérieure ou le revêtement (8) de la construction hybride présentant la surcote.
